# EUROPÄISCHE PATENTANMELDUNG

(11) **EP 0 978 982 A1**
(43) Veröffentlichungstag der Anmeldung: **09.02.2000**
(21) Anmeldenummer: 98114751.5
(22) Anmeldetag: 05.08.1998
(51) Int. Cl.: H04M 3/42, H04Q 7/22, H04M 15/00

(54) **Verfahren zum Administrieren eines Dienstes für einen Teilnehmer**

(71) Anmelder: SIEMENS AKTIENGESELLSCHAFT, 80333 München (DE)
(72) Erfinder: Zygan-Maus, Renate, 81477 München (DE)

(57) **Zusammenfassung**

Der Erfindung liegt die Aufgabe zugrunde, die Notwendigkeit der Angabe einer PIN für das Einbuchen zum teilnehmerseitigen Administrieren eines Dienstes zu vermeiden.
Diese Aufgabe wird dadurch gelöst, daß für das genannte Administrieren ein Mobilnetzendgerät verwendet wird.

Der Mobilteilnehmer macht dem Dienst eine Anschlußnummer eines Festnetzendgerätes bekannt, wobei
die solchermaßen bekanntgemachte Anschlußnummer dem Mobilnetzteilnehmer zugeordnet wird, so daß der Mobilnetzteilnehmer nunmehr das Festnetzendgerät über den besonderen Dienst benutzen kann, und zwar zu Lasten eines durch den Dienst festgelegten Kontos.

## Beschreibung

Für die Nutzung eines FMC-Dienstes (FMC: Fixed-Mobile Converged) muß der Teilnehmer eindeutig identifiziert und autorisiert werden (z.B. um eine korrekte Vergebührung durchführen zu können). Bei Fixed-Mobile Converged Diensten wie z.B. PCS (Personal Communication Service) und CCS (Corporate Communication Service) verwendet der Dienstnutzer zeitweise ein mobiles Endgerät und zeitweise ein Festnetz-Endgerät.

Im Mobilfunknetz erfolgt die eindeutige Identifizierung des Teilnehmers automatisch über die SIM-Karte (SIM: Subscriber Identity Module ). Auch im Festnetz könnte die Identifizierung des Teilnehmers automatisch erfolgen, wenn er ein dem FMC-Dienst administrativ bekanntes und dem Teilnehmer zugeordnetes Endgerät verwendet, und wenn das Festnetz die CallingLineIdentity (Anschlußnummer) dieses Festnetzendgerätes an die FMC-Dienstelogik liefert.

Bei Verwendung eines beliebigen Festnetzanschlusses (d.h. eines Festnetzanschlusses, der dem Teilnehmer nicht administrativ vom FMC-Dienst zugeordnet wurde) ist eine automatische Identifizierung des FMC-Teilnehmers nicht möglich. Aber auch am eigenen Festnetzendgerät ist eine Registrierung zur Verwendung dieses Endgerätes über einen speziellen FMC-Dienst nicht möglich, obwohl dies in bestimmten Fällen sinnvoll wäre (z.B. für Teleworker, wenn bestimmte Rufe von diesem Anschluß auf Kosten der Firma gehen sollen (CCS-Dienst)).

Das Festnetz unterstützt bisher die Benutzung fremder Anschlüsse auf eigene Kosten bzw. des eigenen Anschlusses auf Kosten eines Dritten bisher nur über die Möglichkeit, den Anrufer durch einen inband-Dialog zu identifizieren und zu authentisieren. Dazu muß der Anrufer (z.B. ein IN-Dienstteilnehmer) eine persönliche Identifikationsnummer (PIN) eingeben, die von der Dienstelogik mit im Netz gespeicherten Daten verglichen wird (z.B. bei Kreditkartendiensten oder bei UPT).

Der Erfindung liegt die Aufgabe zugrunde, die Notwendigkeit der Angabe einer PIN für das Einbuchen zum teilnehmerseitigen Administrieren eines Dienstes zu vermeiden.

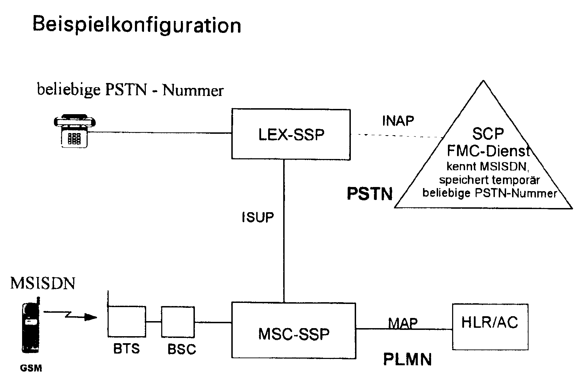

Im folgenden wird ein Ausführungsbeispiel der Erfindung anhand der Zeichnung näher erläutert, wobei die Zeichnung eine Figur umfaßt.

Die Figur stellt eine Beispielkonfiguration dar, in der die Realisierung der erfindungsgemäßen Dienstelogik auf einem Intelligenten Netz IN basiert. Ein erfindungsgemäßer FMC-Dienst muß aber nicht notwendigerweise auf einem Service Control Point SCP eines IN realisiert werden.

Bei einem FMC-Dienst, dessen Dienstlogik in einem Service Control Point SCP realisiert ist, steht dem Anrufer ein mobiles Telefon GSM zur Verfügung. Bei einem Zugang des Teilnehmers zum FMC-Dienst über das mobile Telefon erhält die FMC-Dienstelogik die Mobilfunkrufnummer MSISDN des FMC-Dienstteilnehmers, die der FMC-Dienstelogik administrativ bekannt ist und im Mobilfunknetz PLMN authentisiert wurde (z.B., bei einem IN-basierten FMC-Dienst wird die Mobilfunkrufnummer des FMC-Dienstteilnehmers in dem Parameter CallingPartyNumber des standardisierten IN-Protokolls übertragen, siehe ETSI Core INAP oder ITU-T Recommendations Q.1218/Q.1228 ). Die FMC-Dienstelogik kann den FMC-Teilnehmer automatisch anhand seiner Mobilfunkrufnummer identifizieren und autorisieren .

Dies kann für die Nutzung eines beliebigen Festnetzendgerätes in einem voll digitalen Festnetz PSTN, das die CallingLineIdentity überträgt, durch den Teilnehmer des FMC-Dienstes genutzt werden, um die Verwendung einer PIN zu vermeiden. Die Prozedur dafür ist wie folgt:

### Phase 1:

Der Teilnehmer wählt an seinem mobilen Telefon GSM einen FMC-Dienstzugangscode. Der Zugangswunsch wird gegebenenfalls über Netzgrenzen hinweg (hier von einem mobilen Netz PLMN über ein digitales Festnetz PSTN) zu dem FMC-Dienst weitergeleitet. Der FMC-Dienst identifiziert den Teilnehmer automatisch anhand seiner Mobilfunkrufnummer MSISDN. Der FMC-Dienst veranlaßt daraufhin, daß der Teilnehmer dem Dienst nunmehr eine Anschlußnummer eines Festnetzendgerätes mitteilen soll. Über Sprach- oder DTMF-Eingabe gibt der Teilnehmer die CallingLineIdentity des Festnetzendgerätes ein, das er für eine festlegbare Zeitdauer bzw. bis zur expliziten Deregistrierung für abgehende Gespräche oder andere leitungsvermittelte Dienste (z.B. Datenübertragung) auf seine Kosten nutzen möchte. Der FMC-Dienst registriert das Endgerät daraufhin und ordnet es dem Teilnehmer zu. Der FMC-Dienst kann optional dem Teilnehmer einen Auswahlcode mitteilen, der bei der Nutzung dieses Festnetzendgerätes zusätzlich zu verwenden ist (durch den Auswahlcode kann der Dienst zwischen mehreren erfindungsgemäßen Fremdnutzern des Festnetzendgerätes unterscheiden).

### Phase 2:

Der Teilnehmer wählt am Festnetzendgerät einen speziellen FMC-Dienstzugangscode und optional einen zusätzlichen temporären Selektionscode vor der Zielrufnummer. Im Festnetz wird auf die FMC-Dienstzugangsnummer getriggert und (z.B. mit den bestehenden IN-Prozeduren) eine Abfrage zur FMC-Dienstelogik gemacht. Diese identifiziert anhand der in einem voll digitalen Festnetz mitgelieferten CallingLineIdentity des in Phase 1 registrierten Festnetzendgerätes und optional zusätzlich anhand des temporären Selektionscodes in den gewählten Ziffern (INAP Parameter CalledPartyNumber) den FMC-Dienstteilnehmer und entscheidet auf der Basis des FMC-Dienstteilnehmerprofils über die weitere Behandlung des Rufes (z.B. Vergebührung). Die weitere Behandlung des Rufes steuert die FMC-Dienstelogik (z.B. entsprechend den bestehenden IN-Prozeduren). Die Kostenfreiheit des Festnetzanschlußinhabers kann aufgrund des gewählten speziellen FMC-Dienstzugangscodes in der Festnetzteilnehmervermittlungsstelle aufgrund von administrierten Daten sichergestellt werden, oder gesteuert durch die FMC-Dienstelogik (z.B. mit Hilfe bestehender IN-Prozeduren).

Der FMC-Dienstteilnehmer kann das registrierte Festnetzendgerät auch für nachfolgende Rufe in derselben Weise nutzen, ohne dafür eine eigene PIN zu benötigen, und zwar solange, bis eine Deregistrierung erfolgt.

### Phase 3:

Entweder automatisch nach Ablauf einer vorgebbaren Zeit und/oder durch eine explizite Deregistrierungsprozedur über das mobile Telefon verliert das benutzte Festnetzendgerät die Eigenschaft, vom FMC-Dienstteilnehmer auf seine Kosten benutzt werden zu können bzw. vom FMC-Dienstteilnehmer zu Lasten eines Dritten benutzt werden zu können. (Bei einer expliziten Deregistrierungsprozedur, die analog zur Registrierungsprozedur wieder über das Mobilnetzendgerät durchzuführen ist, überprüft der FMC-Dienst , ob für die vom Teilnehmer angegebene CallingLineIdentity eine Registrierung bereits vorliegt. Falls dies der Fall ist wird die Deregistrierung durchgeführt).

Die Verwaltung von teilnehmerindividuellen PINs für die Nutzung beliebiger Festnetzanschlüsse wird damit für FMC-Dienste überflüssig.

Auch andere FMC-Dienstteilfunktionen als das beschriebene Verfahren zur Nutzung beliebiger Festnetzanschlüsse können ohne die Verwendung einer PIN vom Teilnehmer administriert werden, wenn der Teilnehmer die Administration ausschließlich über sein Mobilfunktelefon durchführt. Die erforderliche Teilnehmeridentifizierung erfolgt durch das Mobilfunknetz in derselben Weise wie für das Verfahren zur Nutzung beliebiger Festnetzanschlüsse beschrieben. Damit kann generell bei FMC-Diensten auf teilnehmerindividuelle PINs verzichtet werden, wenn alle Teinehmereingaben zur Dienstadministration ausschließlich über sein Mobilfunktelefon erfolgen.

### Verwendete Abkürzungen:

- BTS :: Base Transceiver System
- BSC :: Base Station Controller
- HLR/AC :: Home Location Register / Authentication Center
- IN :: Intelligent Network
- INAP :: IN Application Protocol
- ISUP :: ISDN User Part
- LEX-SSP:: Local Exchange mit SSP-Funktionalität
- MSC-SSP:: Mobil Switching Center mit SSP-Funktionalität
- MAP :: Mobile Application Part
- PSTN :: Public Switched Telephone Network
- PLMN :: Public Land Mobile Network
- SSP :: Service switching Point

## Patentansprüche

1. Verfahren zum Administrieren eines Dienstes für einen Teilnehmer,
**dadurch gekennzeichnet**, daß
für das genannte Administrieren ein Mobilnetzendgerät verwendet wird.

2. Verfahren nach Anspruch 1,
**dadurch gekennzeichnet**, daß
zum Administrieren des Dienstes der Dienst von einem Mobilnetzteilnehmer über sein Mobilnetzendgerät angewählt wird, worauf der Mobilnetzteilnehmer automatisch identifiziert wird und dem Mobilnetzteilnehmer nach einer erfolgreichen Identifizierung mitgeteilt wird, wie er das Administrieren bewirken soll.

3. Verfahren nach Anspruch 1 oder 2,
**dadurch gekennzeichnet**, daß
a)dem Mobilnetzteilnehmer nach einer erfolgreichen Identifizierung mitgeteilt wird, daß er dem Dienst nunmehr eine Anschlußnummer eines Festnetzendgerätes bekanntmachen soll,
b)die solchermaßen bekanntgemachte Anschlußnummer dem Mobilnetzteilnehmer zugeordnet wird, so daß der Mobilnetzteilnehmer nunmehr das Festnetzendgerät über den besonderen Dienst benutzen kann, und zwar zu Lasten eines durch den Dienst festgelegten Kontos.

4. Verfahren nach Anspruch 3,
**dadurch gekennzeichnet**, daß dem Mobilnetzteilnehmer nach der genannten Bekanntmachung ei
ner Anschlußnummer eines Festnetzendgerätes ein Auswahl-Code mitgeteilt wird, der bei der Nutzung des Festnetzendgerätes über den Dienst zusätzlich zu verwenden ist

5. Verfahren nach Anspruch 4 oder 5,
**dadurch gekennzeichnet**, daß
automatisch nach Ablauf einer vorgebbaren Zeit und/oder durch eine explizite Deregistrierungsprozedur über das mobile Telefon das benutzte Festnetzendgerät deregistriert wird, wodurch es die Eigenschaft verliert, vom Mobilnetzteilnehmer zu Lasten eines durch den Dienst festgelegten Kontos benutzt werden zu können.

6. Dienstlogik, die einen Dienst steuert, indem sie Anforderungen zum Administrieren eines Dienstes über ein Mobilnetzendgerät eines Mobilnetzteilnehmers entgegennimmt, wobei sie den Teilnehmer anhand der in der Anforderung mitgelieferten Teilnehmernummer identifiziert und nach einer erfolgreichen Identifizierung Anweisungen gibt, wie er das Administrieren des Dienstes bewirken soll.

7. Dienstlogik nach Anspruch 6,
**dadurch gekennzeichnet**, daß
a)sie dem Mobilnetzteilnehmer nach einer erfolgreichen Identifizierung mitteilt, daß er der Dienstlogik nunmehr eine Anschlußnummer eines Festnetzendgerätes bekanntmachen soll,
b)die solchermaßen bekanntgemachte Anschlußnummer dem Mobilnetzteilnehmer zuordnet, so daß der Mobilnetzteilnehmer nunmehr das Festnetzendgerät über den Dienst zu Lasten eines vom Dienst festgelegten Kontos benutzen kann.

8. Dienstlogik nach Anspruch 7,
**dadurch gekennzeichnet**, daß
sie dem Mobilnetzteilnehmer von der Dienstlogik ein Auswahl-Code mitteilt, der bei der Nutzung des Festnetzendgerätes über den Dienst zusätzlich zu verwenden ist

9. Dienstlogik nach Anspruch 7 oder 8,
**dadurch gekennzeichnet**, daß
sie automatisch nach Ablauf einer vorgebbaren Zeit und/oder durch eine explizite Deregistrierungsprozedur über das mobile Telefon das benutzte Festnetzendgerät deregistriert, wodurch es die Eigenschaft verliert, vom Mobilnetzteilnehmer zu Lasten eines vom Dienst festgelegten Kontos benutzt werden zu können.
